# EUROPEAN PATENT APPLICATION

(11) **EP 4 761 321 A1**
(43) Date of publication of application: **17.06.2026**
(21) Application number: 24850766.7
(22) Date of filing: 17.07.2024
(51) Int. Cl.: H04W 24/02

(54) **HISTORICAL INFORMATION PROCESSING METHOD AND APPARATUS**

(30) Priority: 10.08.2023 CN 202311008282
(71) Applicant: Datang Mobile Communications Equipment Co., Ltd., Beijing 100085 (CN)
(72) Inventor: WANG, Ruiwei, Beijing 100085 (CN); YAN, Xue, Beijing 100085 (CN); YAN, Nan, Beijing 100085 (CN)
(74) Representative: dompatent
(86) International application number: PCT/CN2024/105924
(87) International publication number: WO 2025/031116

(57) **Abstract**

This disclosure provides a historical information processing method and apparatus, and relates to the field of communication technology. The method includes: determining, by a first device, whether a specific cell handover or change occurs; and in a case that the specific cell handover or change occurs, performing, by the first device, one of the following: generating terminal historical information including a first identifier, the first identifier indicating that the specific cell handover or change occurs; stopping logging of a cell handover or change; generating terminal camping information, the terminal camping information indicating the duration in which the terminal camps on a network node.

## Description

### CROSS-REFERENCE TO RELATED APPLICATION

The present application claims a priority to Chinese Patent Application No. 202311008282.5, filed on August 10, 2023, and entitled "historical information processing method and apparatus", disclosure of which is incorporated herein by reference in its entirety.

### TECHNICAL FIELD

This disclosure relates to the field of communication technology, and in particular to a historical information processing method and apparatus.

### BACKGROUND

Terminal (also known as user equipment (UE)) historical information includes information such as the cells the UE has camped on and the duration of camping, which are used to solve the ping-pong handover problem.

However, in certain scenarios, such as Layer 1/Layer 2 triggered handover, continuous primary cell (PCell) handover within the master cell group (MCG), and continuous primary secondary cell (PSCell) change within the secondary cell group (SCG), multiple, repeated, and rapid handovers of the UE among multiple pre-configured cells are normal handover phenomena. Therefore, the related art suffers from the problem that the network may erroneously determine that a ping-pong handover occurs.

### SUMMARY

This disclosure is to provide a historical information processing method and apparatus to solve the problem that the network may erroneously determine that a ping-pong handover occurs.

To achieve the above objectives, an embodiment of this disclosure provides a historical information processing method, including:
determining, by a first device, whether a specific cell handover or change occurs;
in a case that the specific cell handover or change occurs, performing, by the first device, one of the following:
   generating terminal historical information including a first identifier, the first identifier indicating that the specific cell handover or change occurs;
   stopping logging of a cell handover or change;
   generating terminal camping information, the terminal camping information indicating a duration in which a terminal camps on a network node.

In some embodiments, the specific cell handover or change includes at least one of the following:
Layer 1 triggered handover;
Layer 2 triggered handover;
continuous primary cell handover; or
continuous primary secondary cell change.

In some embodiments, the method further includes:
in a case that a non-specific cell handover or change occurs, generating, by the first device, terminal historical information including a second identifier, the second identifier indicating that the non-specific cell handover or change occurs.

In some embodiments, the terminal camping information includes:
a third identifier, the third identifier being null or an identifier of any network node or cell on which the terminal camps; and
a total duration in which the terminal camps on multiple cells consecutively during the specific cell handover or change.

In some embodiments, the terminal camping information includes:
an identifier of each network node on which the terminal camps; and
a camping duration in which the terminal camps on each network node.

In some embodiments, the network node includes at least one of the following:
base station; centralized unit; or distributed unit.

In some embodiments, the terminal historical information includes at least one of the following:
terminal historical information related to a primary cell; or terminal historical information related to a primary secondary cell.

In some embodiments, the terminal camping information includes at least one of the following:
terminal camping information related to a primary cell; or terminal camping information related to a primary secondary cell.

To achieve the above objectives, an embodiment of this disclosure also provides a historical information processing apparatus, including: a memory, a transceiver, and a processor; wherein the memory is configured to store program instructions; the transceiver is configured to send and receive data under the control of the processor; and the processor is configured to read the program instructions from the memory and perform the following steps:
determining whether a specific cell handover or change occurs; and
in a case that the specific cell handover or change occurs, performing one of the following:
   generating terminal historical information including a first identifier, the first identifier indicating that the specific cell handover or change occurs;
   stopping logging of a cell handover or change;
   generating terminal camping information, the terminal camping information indicating a duration in which a terminal camps on a network node.

To achieve the above objectives, an embodiment of this disclosure also provides a historical information processing apparatus, including:
a determination module, configured to determine whether a specific cell handover or change occurs; and
a processing module, configured to, in a case that the specific cell handover or change occurs, perform one of the following:
   generating terminal historical information including a first identifier, the first identifier indicating that the specific cell handover or change occurs;
   stopping logging of a cell handover or change;
   generating terminal camping information, the terminal camping information indicating a duration in which a terminal camps on a network node.

To achieve the above objectives, an embodiment of this disclosure also provides a processor-readable storage medium storing program instructions, wherein the program instructions are configured to cause a processor to execute the historical information processing method as described above.

The technical solution of this disclosure has at least the following beneficial effects.

In the technical solution according to embodiments of this disclosure, when a specific cell handover or change occurs, one of the following will be executed: generating terminal historical information including a first identifier (an identifier indicating that the specific cell handover or change occurs), stopping the logging of a cell handover or change, and generating terminal camping information (information indicating the duration in which the terminal camps on a network node). This ensures that when the network analyzes a ping-pong problem, the network only uses UE historical information of a non-specific cell handover or change, thus avoiding the occurrence of erroneous determination.

### BRIEF DESCRIPTION OF THE DRAWINGS

Fig. 1 is a flowchart illustrating a method according to an embodiment of this disclosure;
Fig. 2 is a structural block diagram of an apparatus according to an embodiment of the present disclosure;
Fig. 3 is a schematic modular diagram of an apparatus according to an embodiment of the present disclosure.

### DETAILED DESCRIPTION

In the embodiments of this disclosure, the term "and/or" describes the relationship between related objects, indicating that three relationships can exist. For example, A and/or B can represent three cases: A alone, A and B simultaneously, and B alone. The character "/" generally indicates that the preceding and following related objects have an "or" relationship.

In the embodiments of this disclosure, the term "multiple" refers to two or more, and other quantifiers are similar.

The technical solution according to the embodiments of this disclosure will be clearly and completely described below with reference to the accompanying drawings. Obviously, the described embodiments are only some embodiments of this disclosure, and not all embodiments. Based on the embodiments of this disclosure, all other embodiments obtained by those of ordinary skill in the art without creative effort are within the scope of this disclosure.

For ease of understanding, some aspects related to the embodiments of this disclosure are explained below.

### 1) Introduction to UE historical information

UE historical information is divided into UE historical information logged on the network side and UE historical information logged by the UE. Both contain information such as the cell where the UE camps/accesses and the camping duration, which are used to solve the ping-pong handover problem.

The UE historical information maintained on the network side includes cell identifiers of each PCell and corresponding PSCell of the UE in the connected state, as well as the corresponding access time information. During handover, the UE historical information is sent to the target base station via a handover request message, and the target base station continues to maintain this information. Since the base station is unaware of the terminal's status in the idle state, the UE historical information maintained by the network side does not include information of the UE in the idle state.

Logging of UE historical information on the network side is divided into two scenarios: distributed base station and integrated base station. For distributed base station, the centralized unit (CU) logs the UE historical information. Each time the CU receives a notification of cell change from a distributed unit (DU) via an interface, the CU logs the UE historical information. For integrated base station, the base station is responsible for logging the UE historical information.

The UE historical information maintained by the terminal includes logs of information of PCell and corresponding PSCell in both idle and connected states. This requires terminal's support for the capability, and the UE historical information is obtained by the network side through a dedicated signaling message.

### 2) Multi-Rate Dual Connectivity (MR-DC) network architecture

In a multi-connectivity architecture, a UE may connect to a master node (MN) and one or more secondary nodes (SNs), and interact with these network nodes for signaling and/or data exchange. Both the MN and SN nodes can be an LTE/e-LTE/NR node. When there is one MN node and one SN node, it is called dual connectivity (DC).

When a UE is in the connected state, the UE can connect to one or more network nodes which can be based on one or more radio access technologies (RATs). For example, when MN is an LTE node and SN is an NR node, it is (NG) EN-DC dual connectivity; when MN is an NR node and SN is an LTE node, it is NE-DC dual connectivity; when both MN and SN are an NR node, it is NR-NR-DC.

SCG is a serving cell group under the SN node in MR-DC, and includes one PSCell and one or more possible secondary cells (Scells).

For the UE historical information maintained by the base station, the SN node is responsible for collecting the UE historical information related to PSCell and sending the UE historical information to the MN through an XN/X2 interface message. The MN generates UE historical information containing PCell and PSCell information according to the corresponding time information, as shown in Table 1 below.

**Table 1**

| PCell identifier | PCell camping duration | PSCell identifier (optional) | PSCell camping duration |
|---|---|---|---|
| PCell A | camping duration A | PSCell a | camping duration a |
| | | Does not exist | camping duration b |
| | | PSCell c | camping duration c |
| | | PSCell d | camping duration d |
| | | Does not exist | camping duration e |
| PCell B | camping duration B | Does not exist | Does not exist |

In the UE historical information, PCell and PSCell are associated and correspond to each other in time. As shown in the table above, the UE accesses PCell A and camps on it for a duration A. Meanwhile, the UE establishes dual connectivity and accesses PSCell a and camps on it for a duration a; then the dual connectivity is deleted, and the UE remains in single connectivity for a duration b; subsequently, the UE establishes dual connectivity, accesses PSCell c and camps on it for a duration c; then, the PSCell changes from PSCell c to PSCell d and the UE camps on PSCell d for a duration d; then the dual connection was deleted, and the UE remains in single connectivity for a duration e. Afterwards, PCell hands over from PCell A to PCell B, and the UE remains in single connectivity.

The UE historical information as shown in the table above has a two-dimensional structure. The PCell list in the first dimension contains a maximum of 16 nodes, which means it logs information for 16 cells. The PSCell list corresponding to each PCell node in the second dimension contains a maximum of 8 nodes, which means it logs information for 8 cells. If the logged cell information reaches the upper limit, the oldest logged cell information will be deleted and replaced with the current log. That is, the UE historical information will always contain cell information from the most recent time period.

The UE historical information maintained by the terminal is also of a two-dimensional structure, and is similar in structure and content to the table above. However, the PCell list and the PSCell list corresponding to each PCell in the two dimensions each contain a maximum of 16 nodes, that is, information of 16 cells are logged. When the upper limit is reached, the same processing as the aforementioned applies.

### 3) Enhanced mobility

Handover triggered by Layer 1 (L1) and Layer 2 (L2) uses pre-configured Layer 3 (L3) candidate cells. Based on Layer 1 and Layer 2 measurement and reporting information, the network sends Layer 1 and Layer 2 signaling to trigger the UE to perform one or more consecutive handovers between candidate cells. Consecutive, repeated, and rapid handovers among multiple cells are enabled, unlike the conventional procedure of sending an Layer 3 handover command to trigger handover based on radio resource management (RRM) measurement configuration and reporting information. Layer 1 and Layer 2 triggered handovers can also be applied to SCG, that is, a PSCell change can be triggered based on Layer 1 and Layer 2.

A continuous PSCell change in SCG also involves pre-configuring multiple PSCell candidate cells and execution conditions at layer 3. The UE evaluates the execution conditions, and if the conditions are met, the PSCell change is implemented. After that, the configuration is saved and the evaluation of execution conditions continues. If the conditions are met, the PSCell change continues to be executed until the subsequent conditional PSCell addition/change (CPAC) configuration is released.

Similar to the continuous PSCell change in SCG, the continuous PCell handover in MCG also pre-configures multiple PCell candidate cells and execution conditions. The UE evaluates the execution conditions, and if the conditions are met, the PCell handover is performed. Then the configuration is saved and the evaluation of execution conditions continues. If the conditions are met, the PCell handover continues to be executed until the continuous handover configuration is released.

For handovers triggered by Layer 1 and/or Layer 2, or continuous PCell handover in MCG, or continuous PSCell change in SCG, if the relevant information of these handovers is also logged in the UE historical information, it will not only occupy the storage space of the UE historical information, but also cause the network to erroneously determine that these handovers have a ping-pong handover problem, leading to incorrect optimization of handover configuration parameters.

Embodiments of this disclosure provide a historical information processing method and apparatus. The method and apparatus are based on the same concept, and since they solve problems based on similar principles, their implementations can be mutually referenced; repeated details will not be repeated.

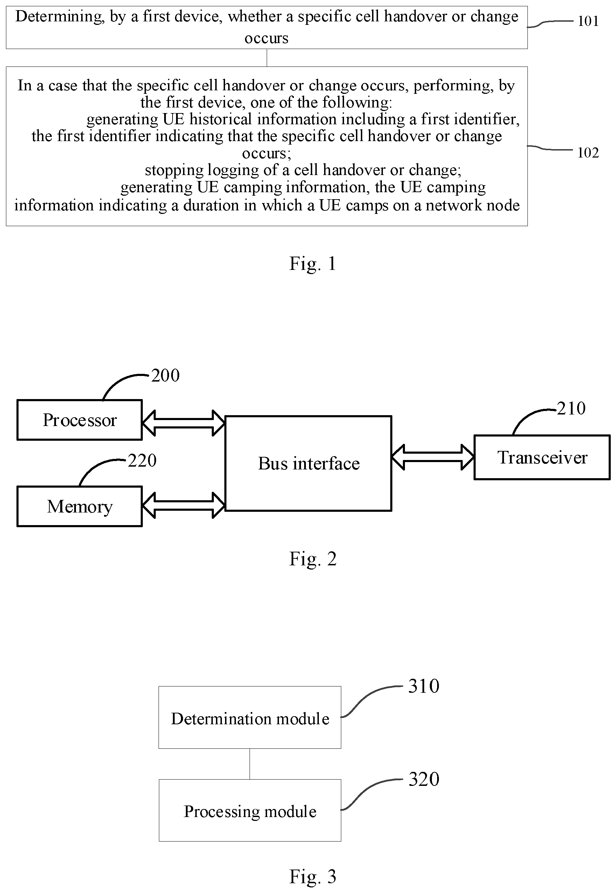

As shown in Fig. 1, a historical information processing method according to an embodiment of this disclosure includes steps 101 and 102.

Step 101: determining, by a first device, whether a specific cell handover or change occurs.

In this step, the first device will determine whether a specific cell handover or change occurs when the cell of the terminal undergoes a handover or change, and then perform corresponding processing for the scenario in which the handover or change occurs. The specific cell handover or change is a cell handover or change scenario in which ping-pong handover determination based on UE historical information is not applicable, e.g., the cell has a small coverage area, a camping duration of the UE in the cell is short when the UE moves quickly, or signal fluctuates, such that the UE may be quickly, continuously and repeatedly handed over among cells.

Step 102: in a case that the specific cell handover or change occurs, performing, by the first device, one of the following:
generating terminal historical information including a first identifier, the first identifier indicating that the specific cell handover or change occurs;
stopping logging of a cell handover or change;
generating terminal camping information, the terminal camping information indicating a duration in which a terminal camps on a network node.

According to step 102, upon it is determined in step 101 that a specific cell handover or change occurs, the first device will perform one of the following: generating terminal historical information including a first identifier (an identifier indicating that the specific cell handover or change occurs), stopping logging of a cell handover or change, and generating terminal camping information (information indicating the duration in which the terminal camps on the network node). This ensures that when the network analyzes a ping-pong problem, the network only uses UE historical information of a non-specific cell handover or change, thus avoiding the occurrence of erroneous determination.

Specifically, in a case that a specific cell handover or change occurs, the first device can add a first identifier to the UE historical information to obtain UE historical information including the first identifier. The first identifier is used to distinguish the UE historical information from UE historical information of other scenarios, so that the network does not use the UE historical information with the added first identifier when analyzing ping-pong handover problems. This first identifier can be understood as indicating that the current UE historical information is not used to determine ping-pong handover; that is, if the network device determines that a piece of UE historical information includes the first identifier during the ping-pong handover determination process, the network device will not use the piece of UE historical information in ping-pong handover determination.

Specifically, in a case that a specific cell handover or change occurs, the first device can also stop logging of a cell handover or change, i.e., the first device will not generate corresponding UE historical information; alternatively, the first device can generate UE camping information indicating the duration in which the terminal camps on the network node. In this way, when the network performs ping-pong handover analysis, the network only uses UE historical information of other scenarios. Therefore, the problem of the network's erroneous determination of ping-pong handover is effectively solved.

Of course, in this embodiment, when the first device stops logging of a cell handover or change, the first device can generate terminal camping information to log the duration in which the terminal camps on the network node. The first device can also generate terminal camping information when generating terminal historical information including the first identifier.

If a specific cell handover or change occurs, the first device can stop logging the cell handover or change, which can save storage space, avoid updating the UE historical information list, and reduce the overwriting of the logged UE historical information.

In a case that a specific cell handover or change occurs, the first device generates UE camping information indicating the duration in which the terminal camps on the network node, thus avoiding the problem of misalignment in time between the UE historical information of PCell and the UE historical information of PSCell.

It should be noted that the first device can be either a terminal or a network device. That is to say, the historical information processing method according to embodiments of this disclosure is applicable to both the terminal's logging of cell handover or change and the network device's logging of cell handover or change.

Of course, since the terminal historical information including the first identifier is not used in determination of ping-pong handover, the first identifier can also be used to indicate that a specific cell handover or change occurs.

In some embodiments, the specific cell handover or change includes at least one of the following:
Layer 1 triggered handover;
Layer 2 triggered handover;
continuous primary cell handover; or
continuous primary secondary cell change.

Layer 1 triggered handover and Layer 2 triggered handover refer to that a Layer 1 and/or Layer 2 signaling triggers the UE to perform one handover or multiple consecutive handovers among candidate cells. Layer 1 and/or Layer 2 triggered handover can also be used in SCG, that is, the PSCell change can be triggered by Layer 1 and/or Layer 2.

Continuous primary cell handover can be continuous PCell handover in MCG; continuous primary secondary cell change can be continuous PSCell change in SCG.

For example, if the first device is a network device (such as a CU or base station), during Layer 1 and/or Layer 2 triggered handover, continuous PCell handover in MCG, or continuous PSCell change in SCG, the UE historical information generated by the CU or base station includes a first identifier to indicate to the network that this UE historical information should not be used when performing ping-pong problem analysis. If the first device is a UE, during Layer 1 and/or Layer 2 triggered handover, continuous PCell handover in MCG, or continuous PSCell change in SCG, the UE historical information generated by the UE includes a first identifier to indicate to the network that this UE historical information should not be used when performing ping-pong problem analysis.

Specifically, depending on the specific cell handover or change, the first device adds a first identifier to the UE historical information of the corresponding node in the PCell list in the first dimension and/or the corresponding node in the PSCell list in the second dimension. The first identifier can be added at the location of the cell identifier or at the location of the camping duration. The first identifier can be a cause value and/or an identifier bit, etc., and the specific form thereof is not limited.

Of course, in this embodiment, the specific cell handover or change is not limited to the above implementation, and will not be enumerated here.

Additionally, in some embodiments, the method further includes:
in a case that a non-specific cell handover or change occurs, generating, by the first device, terminal historical information including a second identifier, the second identifier indicating that the non-specific cell handover or change occurs.

In other words, when the cell of a terminal experiences a handover or change, the first device determines whether a specific cell handover or change occurs, and then performs corresponding processing for different scenarios. For example, the first device determines whether a specific cell handover or change occurs, and the first device generates UE historical information for determining ping-pong handover, only when the first device determines that the handover or change is not a handover triggered by Layer 1 and/or Layer 2, is not a continuous PCell handover in MCG, and is not a continuous PSCell change in SCG. If the first device determines that a handover triggered by Layer 1 and/or Layer 2, or a continuous PCell handover in MCG, or a continuous PSCell change in SCG occurs, the first device will not generate UE historical information for determining ping-pong handover, thus there is no need to add a new node to the UE historical information list, saving storage space, and the already generated UE historical information will not be overwritten.

In a case that a non-specific cell handover or change occurs, the camping duration for a cell (PCell and/or PSCell) is logged in the terminal historical information as shown in Table 1. That is, when a non-specific cell handover or change occurs, the first device will still generate UE historical information for subsequent ping-pong problem analysis. Furthermore, this UE historical information also includes a second identifier to distinguish it from UE historical information generated when a specific cell handover or change occurs. Of course, since the UE historical information generated when a specific cell handover or change occurs includes the first identifier, the UE historical information generated when a non-specific cell handover or change occurs, even without the second identifier, can still be distinguished from UE historical information that includes the first identifier.

Furthermore, in some embodiments, the terminal camping information includes:
a third identifier, the third identifier being null or an identifier of any network node or cell on which the terminal camps; and
a total duration in which the terminal camps on multiple cells consecutively during the specific cell handover or change.

Of course, this terminal camping duration information can also be logged in the UE historical information list. By adding a new node, the total camping duration of the terminal in these cells when specific handover or change occurs can be logged. This not only reduces the occupancy of the UE historical information list by the information logged when specific handover or change occurs, avoiding the deletion of old cell logs when the limit of UE historical information logs is reached, but also ensures alignment of camping duration between the PCell and the corresponding PSCell. For example, as shown in Table 2 below:

**Table 2**

| PCell identifier | PCell camping duration | PSCell identifier (optional) | PSCell camping duration |
|---|---|---|---|
| PCell A | camping duration A | PSCell a | camping duration a |
| | | Third identifier | Total camping duration b in multiple cells during continuous PSCell changes |
| | | PSCell c | camping duration c |

That is, in the case of continuous PSCell changes in SCG, the camping duration b is the total camping duration of the terminal in multiple cells during continuous PSCell changes. The PSCell identifier field corresponding to the camping duration b may have a null value, or can be the identifier of any network node or cell on which the terminal camps during continuous PSCell changes.

Thus, when a handover triggered by Layer 1 and/or Layer 2, or a continuous PCell handover in MCG, or a continuous PSCell change in SCG occurs, the first device adds a new node to the UE historical information list to log the terminal camping information.

The third identifier can be null, meaning it does not log a cell identifier or network node identifier; or, the third identifier can be the identifier of any network node or cell on which the terminal camps. For example, by default, the third identifier can be the identifier of the base station, or the identifier of the CU, or the identifier of the DU, or the identifier of the first cell or the last cell.

In some embodiments, the terminal camping information includes:
an identifier of each network node on which the terminal camps; and
a camping duration in which the terminal camps on each network node.

In other words, similar to the cell-level duration log in the UE historical information, the terminal camping information can log the network node-level camping duration, so that the information can be obtained and used when needed later (e.g., when an inter-MN/SN/CU/DU handover or PSCell change occurs).

In some embodiments, the network node includes at least one of the following:
base station; centralized unit; or distributed unit.

That is, the terminal camping information can be logged at one or more of the base station level, CU level, and DU level to meet different needs.

For example, in the case that a Layer 1 and/or Layer 2 triggered handover, or a continuous PCell handover in MCG, or a continuous PSCell change in SCG occurs, the first device adds a corresponding number of nodes to the UE historical information list based on the number of network nodes involved, to log the terminal's camping duration on each network node. Assuming the default network node is a base station, and a specific cell handover or change involves four cells of two base stations, the camping duration for each cell of the same base station is not logged; instead, the camping duration for each of the two base stations is logged separately. That is, when a handover among cells of a base station occurs, the camping durations for the cells are not logged. When a cell handover or change to a cell of a different base station occurs, a new node is added to the UE historical information list to log the camping duration for the different base station. This is also applicable when the network node is a CU or DU.

Of course, the implementation of network node is not limited to base station, CU or DU, and will not be enumerated here.

In this embodiment, a network node can be an MN node or an SN node.

In some embodiments, the terminal historical information includes at least one of the following:
terminal historical information related to a primary cell; or terminal historical information related to a primary secondary cell.

In other words, in this embodiment, the terminal historical information generated by the first device can log relevant information of PCell and/or PSCell for specific scenarios of cell handover or change, so as to be applicable to dual connectivity.

In some embodiments, the terminal camping information includes at least one of the following:
terminal camping information related to a primary cell; or terminal camping information related to a primary secondary cell.

In other words, similar to UE historical information, the terminal camping information generated by the first device can also log relevant information of PCell and/or PSCell for specific scenarios of cell handover or change, so as to be applicable to dual connectivity.

In summary, according to the method of the embodiments of this disclosure, when a specific cell handover or change occurs, the first device performs one or more of the following: generating terminal historical information including a first identifier (an identifier indicating that the terminal historical information is not used to determine ping-pong handover), stopping logging of a cell handover or change, and generating terminal camping information (information indicating the duration in which the terminal camps on a network node), so that when the network analyzes a ping-pong problem, the network only uses UE historical information of a non-specific cell handover or change, thus avoiding the occurrence of erroneous determination.

As shown in Fig. 2, an embodiment of the present disclosure further provides a historical information processing apparatus, including: a memory 220, a transceiver 210, and a processor 200; the memory 220 is configured to store program instructions; the transceiver 210 is configured to send and receive data under the control of the processor 200; the processor 200 is configured to read the program instructions in the memory 220 and perform the following steps:
determining whether a specific cell handover or change occurs; and
in a case that the specific cell handover or change occurs, performing one of the following:
   generating terminal historical information including a first identifier, the first identifier indicating that the specific cell handover or change occurs;
   stopping logging of a cell handover or change;
   generating terminal camping information, the terminal camping information indicating a duration in which a terminal camps on a network node.

In some embodiments, the specific cell handover or change includes at least one of the following:
Layer 1 triggered handover;
Layer 2 triggered handover;
continuous primary cell handover; or
continuous primary secondary cell change.

In some embodiments, the processor is further configured to perform the following steps:
in a case that a non-specific cell handover or change occurs, generating terminal historical information including a second identifier, the second identifier indicating that the non-specific cell handover or change occurs.

In some embodiments, the terminal camping information includes:
a third identifier, the third identifier being null or an identifier of any network node or cell on which the terminal camps; and
a total duration in which the terminal camps on multiple cells consecutively during the specific cell handover or change.

In some embodiments, the terminal camping information includes:
an identifier of each network node on which the terminal camps; and
a camping duration in which the terminal camps on each network node.

In some embodiments, the network node includes at least one of the following:
base station; centralized unit; or distributed unit.

In some embodiments, the terminal historical information includes at least one of the following:
terminal historical information related to a primary cell; or terminal historical information related to a primary secondary cell.

In some embodiments, the terminal camping information includes at least one of the following:
terminal camping information related to a primary cell; or terminal camping information related to a primary secondary cell.

In Fig. 2, the bus architecture can include any number of interconnected buses and bridges, specifically linking various circuits of one or more processors represented by processor 200 and memory represented by memory 220. The bus architecture can also link various other circuits such as peripheral devices, voltage regulators, and power management circuits, which are well known in the art and therefore will not be described further herein. The bus interface provides an interface. The transceiver 210 can be multiple components, including a transmitter and a receiver, providing a unit for communicating with various other devices over a transmission medium, including wireless channels, wired channels, optical fibers, etc. The processor 200 is responsible for managing the bus architecture and general processing, and the memory 220 can store data used by the processor 200 during operation.

The processor 200 can be a central processing unit (CPU), an application-specific integrated circuit (ASIC), a field-programmable gate array (FPGA), or a complex programmable logic device (CPLD). The processor can also adopt a multi-core architecture.

When a specific cell handover or change occurs, the apparatus according to the embodiment of this disclosure performs one or more of the following: generating terminal historical information including a first identifier (an identifier indicating that the terminal historical information is not used to determine ping-pong handover), stopping logging of a cell handover or change, and generating terminal camping information (information indicating the duration of the terminal's camping in a network node). This ensures that when the network analyzes a ping-pong problem, the network only uses UE historical information of a non-specific cell handover or change, thus avoiding erroneous determination.

It should be noted that the apparatus provided in the embodiment of this disclosure can implement all the method steps implemented in the above method embodiment and can achieve the same technical effect. Therefore, the parts and beneficial effects that are the same as those in the method embodiment will not be described in detail here.

As shown in Fig. 3, an embodiment of this disclosure also provides a historical information processing apparatus, including:
a determination module 310, configured to determine whether a specific cell handover or change occurs; and
a processing module 320, configured to, in a case that the specific cell handover or change occurs, perform one of the following:
   generating terminal historical information including a first identifier, the first identifier indicating that the specific cell handover or change occurs;
   stopping logging of a cell handover or change;
   generating terminal camping information, the terminal camping information indicating a duration in which a terminal camps on a network node.

In some embodiments, the specific cell handover or change includes at least one of the following:
Layer 1 triggered handover;
Layer 2 triggered handover;
continuous primary cell handover; or
continuous primary secondary cell change.

In some embodiments, the apparatus further includes:
a generation module, configured to generate terminal historical information including a second identifier when a non-specific cell handover or change occurs. The second identifier is used to indicate that a non-specific cell handover or change occurs.

In some embodiments, the terminal camping information includes:
a third identifier, the third identifier being null or an identifier of any network node or cell on which the terminal camps; and
a total duration in which the terminal camps on multiple cells consecutively during the specific cell handover or change.

In some embodiments, the terminal camping information includes:
an identifier of each network node on which the terminal camps; and
a camping duration in which the terminal camps on each network node.

In some embodiments, the network node includes at least one of the following:
base station; centralized unit; or distributed unit.

In some embodiments, the terminal historical information includes at least one of the following:
terminal historical information related to a primary cell; or terminal historical information related to a primary secondary cell.

In some embodiments, the terminal camping information includes at least one of the following:
terminal camping information related to a primary cell; or terminal camping information related to a primary secondary cell.

The apparatus according to the embodiment of this disclosure performs one of the following when a specific cell handover or change occurs: generating terminal historical information including a first identifier (an identifier indicating that a specific cell handover or change occurs), stopping logging of cell handover or change, and generating terminal camping information (information indicating the duration of time the terminal camps on a network node). This ensures that when the network analyzes a ping-pong problem, the network only uses UE historical information of a non-specific cell handover or change, thus avoiding the occurrence of erroneous determination.

It should be noted that the apparatus provided in this embodiment can implement all the method steps implemented in the above method embodiment and can achieve the same technical effect. Therefore, the parts and beneficial effects that are the same as those in the method embodiment will not be described in detail here.

In some embodiments of this disclosure, a processor-readable storage medium is also provided. The processor-readable storage medium stores program instructions for causing the processor to perform steps implementing the historical information processing method described above.

When the program instructions are executed by the processor, they can implement all the above-described methods applied to the first device shown in Fig. 1. To avoid repetition, they will not be described again here.

The technical solution provided in the embodiments of this disclosure is applicable to a variety of systems, especially 5th-Generation (5G) systems. For example, applicable systems may include Global System for Mobile Communication (GSM), Code Division Multiple Access (CDMA), Wideband Code Division Multiple Access (WCDMA), General Packet Radio Service (GPRS), Long Term Evolution (LTE), LTE Frequency Division Duplex (FDD), LTE Time Division Duplex (TDD), Long Term Evolution Advanced (LTE-A), Universal Mobile Telecommunication System (UMTS), Worldwide Interoperability for Microwave Access (WiMAX), and 5G New Radio (NR). All of these systems include terminal device and network device. The system may also include a core network component, such as an evolved packet system (EPS) or a 5G system (5GS).

The terminal involved in the embodiments of this disclosure can be a device that provides voice and/or data connectivity to users, handheld device with wireless connectivity, or other processing device connected to a wireless modem. The names of the terminal devices may differ in different systems; for example, in a 5G system, a terminal device can be called User Equipment (UE). Wireless terminal devices can communicate with one or more core networks (CNs) via a Radio Access Network (RAN). Wireless terminal devices can be mobile terminal devices, such as mobile phones (or "cellular" phones) and computers with mobile terminal devices, for example, portable, pocket-sized, handheld, computer-embedded, or vehicle-mounted mobile devices that exchange voice and/or data with the RAN. Examples include Personal Communication Service (PCS) phones, cordless phones, Session Initiated Protocol (SIP) phones, Wireless Local Loop (WLL) stations, and Personal Digital Assistants (PDAs). Wireless terminal device can also be referred to as a system, subscriber unit, subscriber station, mobile station, mobile, remote station, access point, remote terminal, access terminal, user terminal, user agent, or user device, but this is not limited to these terms in the embodiments disclosed herein.

The network device involved in the embodiments of this disclosure may be a base station, which may include multiple cells providing services to terminals. Depending on the specific application, the base station may also be called an access point, or a device in the access network that communicates with the wireless terminal device through one or more sectors on the air interface, or other names. The network device may be used to exchange received air frames with Internet Protocol (IP) packets, acting as a router between the wireless terminal device and the rest of the access network, which may include an Internet Protocol (IP) communication network. The network device may also coordinate the attribute management of the air interface. For example, the network device involved in the embodiments of this disclosure can be a base transceiver station (BTS) in a Global System for Mobile communications (GSM) or Code Division Multiple Access (CDMA), a NodeB in a Wide-band Code Division Multiple Access (WCDMA) system, an evolved Node B (eNB or e-NodeB) in a Long Term Evolution (LTE) system, a 5G base station (gNB) in a next-generation 5G network architecture, a Home evolved Node B (HeNB), a relay node, a femto, a pico, etc., and is not limited in this disclosure. In some network architectures, network devices may include centralized unit (CU) nodes and distributed unit (DU) nodes, which may also be geographically separated.

Network devices and terminal devices can each use one or more antennas to perform multiple-input multiple-output (MIMO) transmission. MIMO transmission can be single-user MIMO (SU-MIMO) or multiple-user MIMO (MU-MIMO). Depending on the configuration and number of antenna combinations, MIMO transmission can be two-dimensional MIMO (2D-MIMO), three-dimensional MIMO (3D-MIMO), full-dimensional MIMO (FD-MIMO), or massive-MIMO, and can also be diversity transmission, pre-coded transmission, or beamforming transmission, etc.

It should be noted that the division of units in the embodiments of this disclosure is illustrative and only represents one logical functional division. In actual implementation, other division methods may be used. Furthermore, the functional units in the various embodiments of this disclosure can be integrated into one processing unit, or each unit can exist physically separately, or two or more units can be integrated into one unit. The integrated units described above can be implemented in hardware or as software functional units.

If the integrated unit is implemented as a software functional unit and sold or used as an independent product, it can be stored in a processor-readable storage medium. Based on this understanding, essential part of the technical solution of this disclosure, or the part that contributes to related technologies, or all or part of the technical solution, can be embodied in the form of a software product. This computer software product is stored in a storage medium and includes several instructions to cause a computer device (which may be a personal computer, server, or network device, etc.) or processor to execute all or part of the steps of the methods described in the various embodiments of this disclosure. The aforementioned storage medium includes various media capable of storing program code, such as USB flash drives, portable hard drives, read-only memory (ROM), random access memory (RAM), magnetic disks, or optical discs.

Those skilled in the art will understand that embodiments of this disclosure can be provided as methods, systems, or computer program products. Therefore, this disclosure can take the form of a completely hardware embodiment, a completely software embodiment, or an embodiment combining software and hardware aspects. Furthermore, this disclosure can take the form of a computer program product embodied on one or more computer-usable storage media (including, but not limited to, disk storage and optical storage) containing computer-usable program code.

This disclosure is described with reference to flowchart illustrations and/or block diagrams of methods, apparatus (systems), and computer program products according to embodiments of this disclosure. It will be understood that each block of the flowchart illustrations and/or block diagrams, and combinations of blocks in the flowchart illustrations and/or block diagrams, can be implemented by computer-executable instructions. These computer-executable instructions can be provided to a processor of a general-purpose computer, special-purpose computer, embedded processor, or other programmable data processing apparatus to produce a machine, such that the instructions, which execute via the processor of the computer or other programmable data processing apparatus, create means for implementing the functions specified in one or more flowchart illustrations and/or one or more block diagrams.

These processor-executable instructions may also be stored in a processor-readable memory that can instruct a computer or other programmable data processing device to operate in a particular manner, such that the instructions stored in the processor-readable memory produce an article of manufacture including instruction means that implement the functions specified in one or more flowcharts and/or one or more block diagrams.

These processor-executable instructions can also be loaded onto a computer or other programmable data processing apparatus to cause a series of operational steps to be performed on the computer or other programmable apparatus to produce a computer-implemented process, such that the instructions, which execute on the computer or other programmable apparatus, provide steps for implementing the functions specified in one or more flowcharts and/or one or more block diagrams.

It should be noted that the above division of modules is merely a logical functional division. In actual implementation, they can be fully or partially integrated into a single physical entity, or they can be physically separated. Furthermore, these modules can be implemented entirely in software via processing element calls; they can be fully implemented in hardware; or some modules can be implemented by processing element calls to software, while others are implemented in hardware. For example, a module can be a separate processing element, or it can be integrated into a chip in the aforementioned device. Alternatively, it can be stored as program code in the memory of the aforementioned device, and its function can be called and executed by a processing element of the device. The implementation of other modules is similar. Moreover, these modules can be fully or partially integrated together, or they can be implemented independently. The processing element mentioned here can be an integrated circuit with signal processing capabilities. In the implementation process, each step of the above method or each of the above modules can be completed through integrated logic circuits in the hardware of the processor element or through software instructions.

For example, each module, unit, subunit, or submodule can be one or more integrated circuits configured to implement the above methods, such as one or more application-specific integrated circuits (ASICs), one or more digital signal processors (DSPs), or one or more field-programmable gate arrays (FPGAs). As another example, when a module is implemented using processing element scheduler code, the processing element can be a general-purpose processor, such as a central processing unit (CPU) or other processor capable of calling program code. Furthermore, these modules can be integrated together to implement a system-on-a-chip (SOC).

Terms "first", "second" and the like used in the description and claims of this disclosure are used to distinguish similar objects and are not necessarily used to describe a specific order or sequence. It should be understood that such data can be interchanged where appropriate so that embodiments of this disclosure described herein may be implemented in orders other than those illustrated or described herein. Furthermore, the terms "including" and "having" and any variations thereof are intended to cover non-exclusive inclusion; for example, a process, method, system, product, or apparatus that includes a series of steps or units is not necessarily limited to those steps or units explicitly listed, but may include other steps or units not explicitly listed or inherent to such processes, methods, products, or apparatus. Additionally, the use of "and/or" in the specification and claims indicates at least one of the connected objects, such as A and/or B and/or C, indicating seven possibilities: A alone, B alone, C alone, and both A and B, both B and C, both A and C, and A, B, and C. Similarly, the use of "at least one of A or B" in this specification and claims should be understood as "A alone, B alone, or both A and B."

Obviously, those skilled in the art can make various modifications and variations to this disclosure without departing from its spirit and scope. Therefore, if such modifications and variations fall within the scope of the claims of this disclosure and their equivalents, this disclosure is also intended to include such modifications and variations.

## Claims

1. A historical information processing method, comprising:
determining, by a first device, whether a specific cell handover or change occurs; and
in a case that the specific cell handover or change occurs, performing, by the first device, one of the following:
generating user equipment (UE) historical information comprising a first identifier, the first identifier indicating that the specific cell handover or change occurs;
stopping logging of a cell handover or change;
generating UE camping information, the UE camping information indicating a duration in which a UE camps on a network node.

2. The method according to claim 1, wherein the specific cell handover or change comprises at least one of the following:
Layer 1 triggered handover;
Layer 2 triggered handover;
continuous primary cell handover; or
continuous primary secondary cell change.

3. The method according to claim 1, wherein the UE camping information comprises:
a third identifier, the third identifier being null or an identifier of any network node or cell on which the UE camps; and
a total duration in which the UE camps on multiple cells consecutively during the specific cell handover or change.

4. The method according to claim 1, wherein the UE camping information comprises:
an identifier of each network node on which the UE camps; and
a camping duration in which the UE camps on each network node.

5. The method according to claim 3 or 4, wherein the network node comprises at least one of the following:
base station; centralized unit; or distributed unit.

6. The method according to claim 1, wherein the UE historical information comprises at least one of the following:
UE historical information related to a primary cell; or UE historical information related to a primary secondary cell.

7. The method according to claim 1, wherein the UE camping information comprises at least one of the following:
UE camping information related to a primary cell; or UE camping information related to a primary secondary cell.

8. A historical information processing apparatus, comprising: a memory, a transceiver, and a processor;
wherein the memory is configured to store program instructions; the transceiver is configured to send and receive data under the control of the processor; the processor is configured to read the program instructions from the memory and perform the following steps:
determining whether a specific cell handover or change occurs; and
in a case that the specific cell handover or change occurs, performing one of the following:
generating UE historical information comprising a first identifier, the first identifier indicating that the specific cell handover or change occurs;
stopping logging of a cell handover or change;
generating UE camping information, the UE camping information indicating a duration in which a UE camps on a network node.

9. The apparatus according to claim 8, wherein the specific cell handover or change comprises at least one of the following:
Layer 1 triggered handover;
Layer 2 triggered handover;
continuous primary cell handover; or
continuous primary secondary cell change.

10. The apparatus according to claim 8, wherein the UE camping information comprises:
a third identifier, the third identifier being null or an identifier of any network node or cell on which the UE camps; and
a total duration in which the UE camps on multiple cells consecutively during the specific cell handover or change.

11. The apparatus according to claim 8, wherein the UE camping information comprises:
an identifier of each network node on which the UE camps; and
a camping duration in which the UE camps on each network node.

12. The apparatus according to claim 10 or 11, wherein the network node comprises at least one of the following:
base station; centralized unit; or distributed unit.

13. The apparatus according to claim 8, wherein the UE historical information comprises at least one of the following:
UE historical information related to a primary cell; or UE historical information related to a primary secondary cell.

14. The apparatus according to claim 8, wherein the UE camping information comprises at least one of the following:
UE camping information related to a primary cell; or UE camping information related to a primary secondary cell.

15. A historical information processing apparatus, comprising:
a determination module, configured to determine whether a specific cell handover or change occurs; and
a processing module, configured to, in a case that the specific cell handover or change occurs, perform one of the following:
generating UE historical information comprising a first identifier, the first identifier indicating that the specific cell handover or change occurs;
stopping logging of a cell handover or change;
generating UE camping information, the UE camping information indicating a duration in which a UE camps on a network node.

16. The apparatus according to claim 15, wherein the specific cell handover or change comprises at least one of the following:
Layer 1 triggered handover;
Layer 2 triggered handover;
continuous primary cell handover; or
continuous primary secondary cell change.

17. The apparatus according to claim 15, wherein the UE camping information comprises:
a third identifier, the third identifier being null or an identifier of any network node or cell on which the UE camps; and
a total duration in which the UE camps on multiple cells consecutively during the specific cell handover or change.

18. The apparatus according to claim 15, wherein the UE camping information comprises:
an identifier of each network node on which the UE camps; and
a camping duration in which the UE camps on each network node.

19. The apparatus according to claim 17 or 18, wherein the network node comprises at least one of the following:
base station; centralized unit; or distributed unit.

20. The apparatus according to claim 15, wherein the UE historical information comprises at least one of the following:
UE historical information related to a primary cell; or UE historical information related to a primary secondary cell.

21. The apparatus according to claim 15, wherein the UE camping information comprises at least one of the following:
UE camping information related to a primary cell; or UE camping information related to a primary secondary cell.

22. A processor-readable storage medium storing a computer program, wherein the computer program is configured to cause a processor to perform the historical information processing method according to any one of claims 1 to 7.
